Europäisches Patentamt

European Patent Office

Office européen des brevets

(19)

(11) Publication number : **0 578 422 A2**

(12) # EUROPEAN PATENT APPLICATION

(21) Application number : **93305072.6**

(22) Date of filing : **29.06.93**

(51) Int. Cl.⁵ : **G01L 3/12**

(30) Priority : **30.06.92 GB 9213915**

(43) Date of publication of application :
**12.01.94 Bulletin 94/02**

(84) Designated Contracting States :
**DE ES FR GB IT**

(71) Applicant : **LUCAS INDUSTRIES PUBLIC LIMITED COMPANY**
**Brueton House, New Road**
**Solihull, West Midlands B91 3TX (GB)**

(72) Inventor : **Sakai, Izumi**
**16, Baxters Road**
**Solihull, West Midlands B90 2RU (GB)**

(74) Representative : **Robinson, John Stuart et al**
**Marks & Clerk Alpha Tower Suffolk Street**
**Queensway**
**Birmingham, B1 1TT (GB)**

(54) **Apparatus for measuring torque.**

(57)   An apparatus for measuring torque in a member (3) comprises a photo-elastic sensor element (5) for attachment to the member (3), a source of radiation (S) for illuminating the sensor element (5) and a detector (D) sensitive to radiation received from the sensor element (5). The member (3) suffers torsional deformation when transmitting a torque. The deformation places a stress on the sensor element (5) and causes the polarisation of the radiation within the sensor element (5) to be altered. Intensity or changes in the spectral distribution of radiation are measured by the detector to provide an indication of the torque.

FIG.3.

EP 0 578 422 A2

The present invention relates to an apparatus for measuring torque, for example the torsional deformation of a shaft transmitting a torque. The deformation of such a shaft is substantially proportional to the torque transmitted by the shaft, so that measurement of torsional deformation of the shaft provides a measurement of the torque transmitted by the shaft.

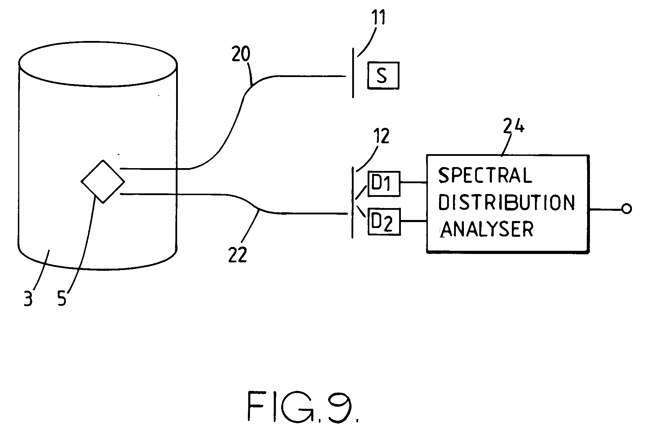

A known torque measurement system is illustrated in Figure 7 of the accompanying drawings and utilises strain gauges 1 and 2 disposed at approximately 45° to the axis, of a shaft 3. The strain gauges are connected to data processing equipment (not shown) via wires 4. However, the strain gauges 1,2 are susceptible to electro-magnetic interference. Furthermore, the wires 4 may be stressed if the shaft 3 turns or rotates.

It is known from Wesson, US 4 498 348 that stress birefringence (also known as photo-elasticity) of a transparent member can be used to measure a force applied to that member. Wesson describes the construction of a joystick using photo-elastic material and a device for measuring the rate of rotation of a shaft.

According to the present invention there is provided an apparatus for measuring torque, comprising:

a photo-elastic sensor element for attachment to the member subjected to the torque;

a source of radiation for illuminating the sensor element; and

a detector sensitive to radiation from the sensor element.

In use, the sensor element is attached to the member such that deformation of the member causes deformation of the sensor element. Where the member is a shaft, the sensor element is attached to an outer surface of the shaft and responds to torsional deformation of the shaft so as to provide a measure of the torque transmitted thereby. The sensor element may be applied as a coating, for instance around the shaft so as to provide an uninterrupted measurement for a rotating shaft.

Preferably the detector is sensitive to the polarisation of the radiation from the sensor element. The detector may comprise a polariser to select radiation polarised in a first direction and a photosensitive transducer to measure the intensity of the radiation polarised in the first direction.

Preferably the illumination provided by the source is polarised in a second direction. The polarisation in the second direction may be achieved by a polariser in the source, or interposed between the source and the sensor element.

Preferably the first and second directions are parallel or perpendicular to each other.

Alternatively a polariser may be formed on the surface of the sensor element. The sensor element may be illuminated with unpolarised radiation, and the detector may be insensitive to the polarisation of the

radiation received from the sensor element.

Preferably the sensor element has a reflective layer. Radiation incident on a first surface at a first side of the sensor element passes through a layer of photo-elastic material to reach the reflective layer. Preferably the reflective layer is formed at a second side of the sensor element opposite the first side. Radiation reflected from the reflecting layer passes back through the photo-elastic material to the first surface from where the radiation leaves the sensor element. The member, for instance the shaft, may be polished to form the reflective layer.

Advantageously phase delay means may be introduced into the radiation path to provide a predetermined phase delay between orthogonal components of the radiation. For example, a layer of material providing a delay of $\lambda/8$ (where $\lambda$ is the wavelength of the radiation) may be included within the sensor element, thereby introducing a delay of $\lambda/4$ between components of radiation passing through the layer twice.

Alternatively a phase delay may be introduced by interposing at least one layer of delay material in the path between the source and the sensor element, between the sensor element and the detector, or both.

Preferably the radiation is light from the visible or infra-red parts of the spectrum.

The sensor element may be pre-stressed before mounting to the member so as to provide an indication of the sense of direction in which the torque is acting.

Advantageously a second detector can be used to monitor the output of the source, or the intensity of unpolarised light or orthogonally polarised light (depending on the configuration of the polarisers used) to account for variations in the source output or ambient illumination of the sensor element.

The optical path to and from the sensor element may comprise at least one optical fibre.

The sensor element may comprise a material which exhibits stress birefringence as a function of wavelength of the radiation. The sensor element may be illuminated with polarised radiation having at least two wavelengths. Each wavelength will undergo a different amount of rotation for a given stress acting on the sensor element. The radiation received from the sensor element after passing the radiation through a polariser is "colour" encoded, that is the spectral distribution of the radiation is a function of the stress acting on the sensor element and hence the torque transmitted by the member. The "colour" of the radiation may be determined using an apparatus as disclosed in EP 0224994 A3, incorporated herein by reference. The apparatus for determining colour is not limited to use with radiation falling solely within the range of human colour vision. The concept of a measurement of "colour" can be extended to include light extending beyond the range of human colour vision.

As a further alternative the polariser associated with the detector may be arranged to polarise limited ranges of wavelengths. For example, the polariser may polarise visible light and have little or no effect on infra-red radiation. Changes in torque alter the polarisation of the visible and infra-red light, but after passing through the detector's polariser only the intensity of the visible light changes with torque. The light received by the detector thus has a spectral distribtion which is a function of torque.

It is thus possible to provide an apparatus for measuring torque using a sensor element that is not physically connected to the remainder of the measurement apparatus and can therefore be used to measure the deformation of a moving member without stressing interconnections. The sensor element may be mounted on a torque transmitting member so as to measure torsional deformation of the member, and hence the torque transmitted by the member. Furthermore an optical measurement system provides good immunity to electro-magnetic interference.

The invention will further be described, by way of example, with reference to the accompanying drawings, in which:

Figure 1 is a schematic diagram illustrating the deformation of a shaft transmitting a torque;

Figure 2 is a schematic diagram of a sensor element suitable for use in a torque measurement apparatus constituting an embodiment of the present invention;

Figure 3 is a schematic diagram of a torque measurement apparatus constituting a first embodiment of the present invention;

Figures 4a and 4b show further arrangements for a sensor element;

Figure 5 is a schematic diagram of a torque measurement apparatus constituting a second embodiment of the present invention;

Figures 6a to 6c show graphs of intensity versus phase delay for different optical arrangements for embodiments of the present invention;

Figure 7 shows a known torque measurement apparatus;

Figures 8a to 8d show the change in polarisation of polarised light as a result of the phase delay introduced by stressing a photo-elastic material; and

Figure 9 shows an apparatus constituting a further embodiment of the present invention.

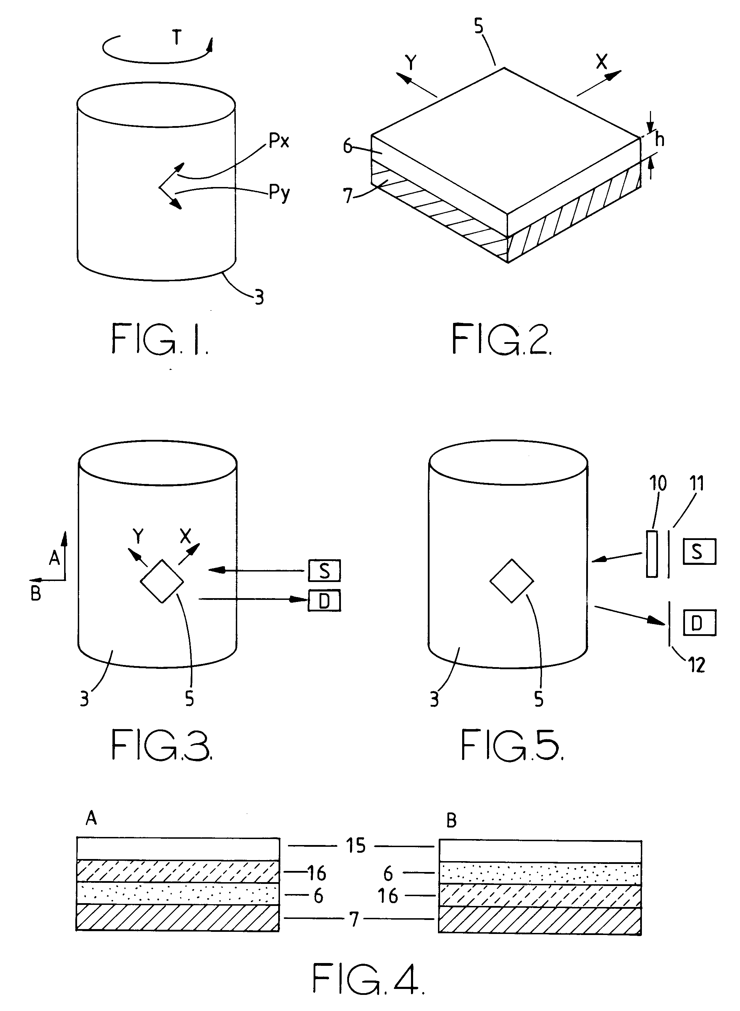

If a shaft 3 is deformed by a torque T applied in a first direction, as illustrated in Figure 1, then the material of the shaft is stretched along the direction Px and compressed along the direction Py. If a torque is applied in the opposite direction to that shown in Figure 1, then the material of the shaft is compressed along the direction Px and stretched along the direction Py.

Figure 2 schematically illustrates a sensor element 5 comprising a layer 6 of material having photo-elastic properties and a reflecting layer 7. The photo-elastic effect is such that, for two perpendicular components of light propagating through the material, stress applied in a direction transverse to the direction of propagation of the light causes one component to become delayed with respect to the other. The delay is proportional to the stress and is cumulative. The photo-elastic effect can be used to change the polarisation of polarised light. The sensor element 5 is illuminated by plane polarised light having components parallel to the X and Y axes, for instance by having the plane of polarisation at 45° to the X axis. The phase difference δ between the components is given by:

$$\delta = \alpha 2h(Sx - Sy)$$

where
α is a constant of proportionality;
h is the thickness of the photo-elastic material;
Sx is stress parallel to the X axis; and
Sy is stress parallel to the Y axis.

The light passing through the layer 6 of photo-elastic material is reflected at the reflecting layer 7 and passes back through the layer 6.

The sensor element 5 is mounted on a shaft 3 such that deformation of the shaft 3 results in deformation of the sensor element 5. The sensor element is mounted such that its X and Y axes are substantially 45° to the longitudinal axis of the shaft 3. The sensor element 5 is illuminated with light from a source S and light from the sensor element is received by a detector D.

In a first embodiment, the sensor element 5 comprises only a layer of photo-elastic material 6 and a reflecting layer 7, as illustrated in Figure 2. The photo-elastic material may be a plastics. The source S provides light polarised in a first direction P1. The detector D comprises a light sensitive transducer sensitive to light polarised in a second direction P2. The directions P1 and P2 can be selected by inserting polarisers in the light paths adjacent the source and detector. The polarisers may be formed integrally with the source and/or detector. Figure 6a shows a plot of the light intensity reaching the light sensitive transducer of the detector D when P1 and P2 are parallel to an A axis, or P1 and P2 are parallel to a B axis, where the A and B axes are parallel and perpendicular, respectively, to the longitudinal axis of the shaft 3 as shown in Figure 3. The phase delay δ is proportional to the shearing stress (Sx-Sy) applied to the sensor element 5. The intensity I of the light reaching the transducer is approximated by

$$I \propto (1 + \cos\delta).$$

In a second embodiment P1 and P2 are perpendicular to one another but P1 is parallel to either the A axis or the B axis. The intensity of light reaching the light sensitive transducer is illustrated in Figure 6b. The intensity I of the light reaching the transducer is approximated by

$$I \propto (1 - \cos\delta).$$

The first and second embodiments have responses that are symmetric about the origin. Thus both arrangements are unable to indicate the direction of the torque. The apparatus can detect both the magnitude and direction of the torque if the operating point of the system is moved so that the light intensity reaching the transducer is as indicated in Figure 6c. This is achieved by inserting a phase delay into the optical path.

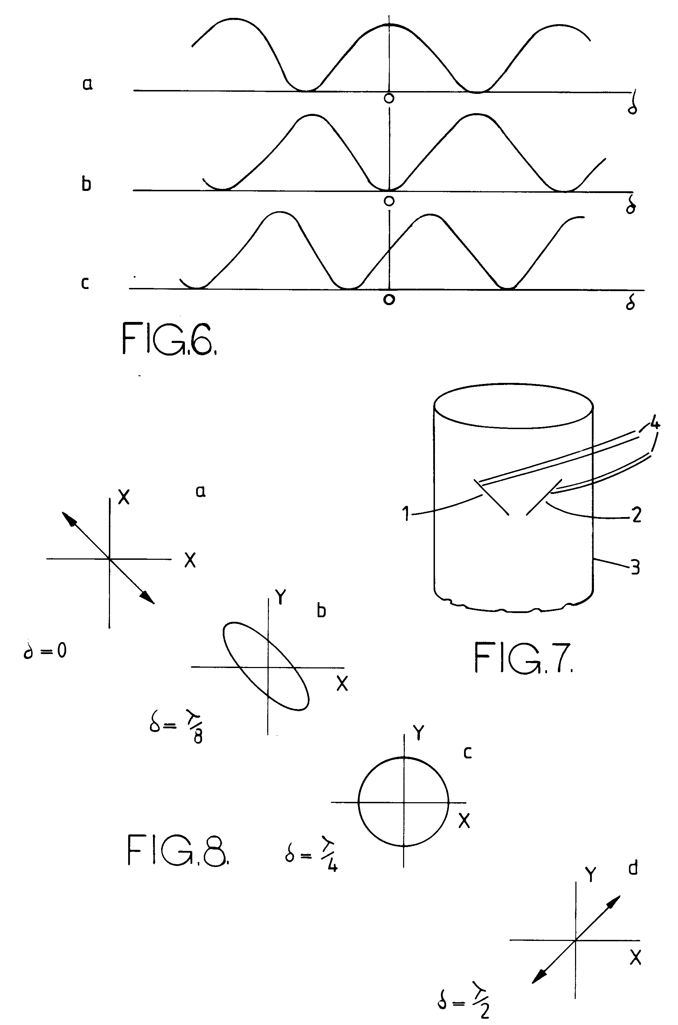

In a third embodiment, a phase delay is provided for delaying one of the orthogonal components of the polarised light by substantially λ/4 with respect to the other component. This can be achieved, as shown in Figure 5, by inserting a λ/4 delay plate 10 in the path of the polarised light. Polarisers 11 and 12 are provided for the source and the detector, respectively. The delay plate 10 is shown in the optical path from the source S to the sensor element 5, but may alternatively be provided in the optical path from the sensor element 5 to the detector D. Furthermore the delay may be provided by placing a delay in both optical paths. Delays of $(2N+1)λ/4$, where N is a positive integer, can be used.

In a fourth embodiment, the delay plate 10 and the polarisers 11 and 12 for the source and detector, respectively, are omitted. The construction of the sensor element 5 is modified as shown in Figures 4a and 4b. The sensor element, as shown in Figure 4a, is a sandwich of a linear polariser 15, a λ/8 delay plate 16, a layer of photo-elastic material 6 and a reflecting layer 7. The relative positions of the delay plate 16 and the layer of photo-elastic material 6 can be changed, as shown in Figure 4b. The linear polariser 15 and the delay plate 16 are made of materials that are substantially non-photo-elastic compared to the layer 6 of photo-elastic material.

The third and fourth embodiments have a response as illustrated in Figure 6c.

Referring to Figure 3 and to Figures 8a-8d, a description of the operation will be given. The polarised light from the light source is incident upon the layer 6 of photo-elastic material of the sensor element 5 such that the components of the light along the X and Y axes are substantially equal. There will be no phase change between the components if the layer 6 is unstressed, as shown in Figure 8a. Consequently the polarisation of the light is unchanged. If the layer 6 is stressed, then a phase delay between the components will occur. As the delay δ increases from 0 to λ/2 the polarisation changes from linearly polarised, through elliptically polarised to circularly polarised light for delays of λ/4. The polarisation then returns through elliptically polarised to linearly polarised light for delays of λ/2. However the plane of the linearly polarised light has been rotated through π/4 radians. Further phase delay δ moves the polarisation back through elliptically and circularly polarised to the original polarisation for delays of an integer number of wave lengths. The phase delay for compressional stress is opposite to the phase delay for tensional stress. Light from the sensor element 5 travels to the detector element D via the polariser P2.

The detector D measures the intensity of light polarised parallel to P2.

In the first embodiment P1 and P2 are parallel. Thus the output of the detector is a maximum for zero applied torque. In the second embodiment P1 and P2 are perpendicular, giving an apparatus having minimum detector output for zero applied torque. The third and fourth embodiments include λ/4 delay elements. The inclusion of a λ/4 delay, either as a separate delay plate or a λ/8 delay plate integral with the sensor element 5, through which the light passes twice to give the λ/4 delay required, changes the polarisation of the light when the layer 6 is unstressed from linearly polarised, as in Figure 8a, to circularly polarised, as in Figure 8c, thereby moving the operating point of the deformation measurement apparatus so as to give the response characteristic as illustrated in Figure 6c.

The intensity of the light reaching the photosensitive transducer of the detector D is amplitude modulated. It may be desirable in some applications to compensate for possible variations in source intensity or ambient light intensity.

If contamination of the signal by ambient or environmental light is unlikely to occur, then it may be sufficient to provide a second photo-sensitive transducer at the sources to monitor the intensity of the source. An output signal of the second photo-sensitive transducer may then be used to stabilise the source output by use of feedback to a source intensity controller.

If contamination by environmental light may be a significant problem, it is possible to compensate for the contamination by using a second detector to monitor the intensity of light which is cross polarised with respect to the source if the source is a polarised light source, or to measure the intensity of unpolarised light. A ratio can be taken between the outputs of the first and second detectors to provide a measurement of deformation that is substantially insensitive to source intensity variations or contamination by other light. It is also possible to take the ratio between polarised light of a first part of the spectrum and unpolarised light of a second part of the spectrum, for example the polarised light could be visible and the unpolarised light could be infra-red light.

The light source may be a light emitting diode, a laser diode or a lamp. The light source may be continuous or it may be modulated. The optical system may comprise bulk optics or fibre optics.

Figure 9 shows a further embodiment in which polarised broadband light from the source S is conveyed to the sensor element 5 via a first optical fibre 20. Light received from the sensor element is collected and conveyed via a second optical fibre 22 and a polariser 12 to a detector having a first photodetecotr D1 sensitive to a first band of wavelengths, such as visible light, and a second photodetector D2 sensitive to a second band of wavelengths, such as infra-red light. The first and second bands may overlap. Outputs of the first and second detectors D1 and D2 are provided to a spectral distribution analyser 24 which processes the outputs, for example by taking a ratio of the outputs or performing processing as described in EP 0224994 A3, to form a signal representing the torque in the member 3. The sensor element 5 may exhibit birefringence which is a function of wavelength of the light impinging on the sensor element. Alternatively the polariser 12 may be ineffective at polarising a range of wavelengths of the light provided by the source S. Thus the spectral distribution of light after passing through the polariser 12 is a function of torque.

The sensor element 5 has been shown as a single square shaped element. However, the shape of the sensor element is not limited to being square and any suitable number of elements may be used. For example, the sensor element may be provided as a cylindrical band around a rotating shaft. Alternatively, a series of discrete elements fixed around the shaft may be used. Thus the shape of the sensor element and the number of elements may be selected to suit the application.

## Claims

1. An apparatus for measuring torque, comprising a sensor element (5) for attachment to a member subjected to the torque, characterized by a source (S) of radiation for illuminating the sensor element (5) and a detector (D) sensitive to radiation from the sensor element, the sensor element (5) being a photo-elastic sensor element.

2. An apparatus as claimed in Claim 1, characterized in that the sensor element (5) is applied as a coating on the member.

3. An apparatus as claimed in Claim 1 or Claim 2, characterized in that the detector (D) is arranged to measure the intensity of radiation polarised in a first direction.

4. An apparatus as claimed in any one of the preceding claims, characterized in that the illumination provided by the source (S) is polarised in a second direction.

5. An apparatus as claimed in Claim 4 when dependent on Claim 3, characterized in that the first and second directions are substantially parallel or perpendicular to each other.

6. An apparatus as claimed in Claim 1 or 2, characterized in that a polariser is formed on the surface of the sensor element (5).

7. An apparatus as claimed in any one of the preceding claims, characterized in that the sensor element has a reflective layer (7).

8. An apparatus as claimed in Claim 7, characterized in that the sensor element (5) is arranged such that radiation incident on a first surface of the sensor element (5) passes through a layer of photo-elastic material (6) to reach the reflective layer (7), and such that radiation reflected from the reflective layer (7) passes back through the photo-elastic material (6) to the first surface where the radiation leaves the sensor element (5).

9. An apparatus as claimed in any one of the preceding claims, characterized by further comprising phase delay means (10, 16) within the path of the radiation to provide a predetermined phase delay between orthogonal components of the radiation.

10. An apparatus as claimed in Claim 9, characterized in that the sensor element (5) further comprises a layer of material (16) providing a phase delay of substantially $\lambda/8$, where $\lambda$ is a wavelength of the radiation, thereby introducing a delay of substantially $\lambda/4$ between components of radiation passing through the layer (16) twice.

11. An apparatus as claimed in Claim 9 or 10, characterized by including at least one phase delay means in at least one of the path between the source (S) and the sensor element (5) and the path between the sensor element (5) and the detector (D).

12. An apparatus as claimed in any one of the preceding claims, characterized in that the sensor element (5) is prestressed before mounting to the member (3) so as to provide an indication of the direction in which the torque is acting.

13. An apparatus as claimed in any one of the preceding claims, characterized in that a second detector is provided for monitoring variations in the source or ambient illumination of the sensor element (5).

14. An apparatus as claimed in any one of the preceding claims, characterized in that the source (S) is arranged to illuminate the sensor element (5) with at least two wavelengths of radiation, and the detector (D1, D2) is sensitive to the spectral distribution of light received from the sensor element.

15. An apparatus as claimed in Claim 14, characterized in that light conveyed to the detector (D1, D2) is arranged to pass through a polariser (12) which only polarises a sub-range of the wavelengths of radiation produced by the source.

FIG.1.

FIG.2.

FIG.3.

FIG.5.

FIG.4.

FIG.6.

FIG.7.

FIG.8.

FIG. 9.